# EUROPÄISCHE PATENTSCHRIFT

(11) **EP 2 956 313 B1**
(45) Veröffentlichungstag und Bekanntmachung des Hinweises auf die Patenterteilung: **11.04.2018**
(21) Anmeldenummer: 14700740.5
(22) Anmeldetag: 17.01.2014
(51) Int. Cl.: B60G 3/20, B60G 3/28, B60G 7/00, B60G 11/14

(54) **HINTERACHSE EINES ZWEISPURIGEN FAHRZEUGS**
REAR AXLE OF A TWO-TRACK VEHICLE
ESSIEU ARRIÈRE D'UN VÉHICULE À DEUX VOIES

(30) Priorität: 15.02.2013 DE 102013202527
(43) Veröffentlichungstag der Anmeldung: 23.12.2015
(73) Patentinhaber: Bayerische Motoren Werke Aktiengesellschaft, 80809 München (DE)
(72) Erfinder: KETTENBERGER, Johann, 84543 Winhoering (DE); STENZENBERGER, Alfred, 86681 Fuenfstetten (DE)
(86) Internationale Anmeldenummer: PCT/EP2014/050924
(87) Internationale Veröffentlichungsnummer: WO 2014/124778

(56) Entgegenhaltungen:
- EP-A2- 0 136 563
- EP-A2- 1 738 939
- FR-A1- 2 832 097
- FR-A1- 2 914 586
- JP-A- S6 218 309

## Beschreibung

Die Erfindung betrifft eine Hinterachse eines zweispurigen Fahrzeugs nach dem Oberbegriff des Anspruchs 1. Die FR 2 914 586 A1 zeigt eine Hinterachse mit diesen Merkmalen; weiterhin wird zum Stand der Technik auf die JP 62-18309 sowie auf die EP 0 136 563 B2 verwiesen.

Die in der letztgenannten Schrift gezeigte Achskonstruktion wird auch als Schwertlenkerachse bezeichnet, wobei diese gezeigte Konstruktion hinsichtlich der Kräfteverhältnisse im Rahmen der Abstützung des Fahrzeugaufbaus günstiger als manche heute in Serie befindlichen Schwertlenkerachsen ist, nachdem in diesem druckschriftlichen Stand der Technik sowohl die Tragfeder als auch der Schwingungsdämpfer direkt am Radträger abgestützt sind. Damit sind weder die Querlenker noch deren Gelenke mit dem Gewicht des Fahrzeug-Aufbaus belastet und es ist jedenfalls für den Dämpfer ein funktional günstiges Übersetzungsverhältnis darstellbar. Allerdings ist der Bauraumbedarf dieser bekannten Konstruktion insbesondere in Vertikalrichtung betrachtet relativ hoch, so dass nicht nur diesbezüglich eine Verbesserung erwünscht ist, sondern auch eine günstige und mechanisch hoch belastbare Hinterachs-Gestaltung gefragt ist, bei welcher das Rad nicht nur angetrieben, sondern auch zumindest geringfügig gelenkt werden kann. Hierfür kann auch die eingangs genannte FR 2 914 586 A1 keine Anregung bieten.

Die Lösung dieser soeben formulierten Aufgabe ergibt sich für eine Fahrzeug-Hinterachse nach dem Oberbegriff des einzigen Patentanspruchs mit den kennzeichnenden Merkmalen dieses Anspruchs.
Demnach ist die Tragfeder ist in Fahrtrichtung betrachtet soweit vor Radmitte sowie unterhalb Radmitte auf einem vom Radträger zur Fahrzeugmittenebene hin abragenden Ausleger abgestützt, dass eine in Fahrzeug-Querrichtung horizontal liegende Antriebswelle hinter dieser Tragfeder liegt. Mit einer vorgeschlagenen tiefen Anordnung kann die Tragfeder in Verbindung mit einer kompakten Bauweise derselben, die sich aus einer darstellbaren Federübersetzung in der Größenordnung von 0,7 bis 0,8 - resultierend aus der Abstützung auf einem zur Fzg.-Mittenebene hin abragenden Ausleger - ergibt, praktisch vollständig unterhalb eines Karosserielängsträgers des Fzg.-Aufbaus angeordnet werden. Im Fall eines Personenkraftwagens ist damit ein äußerst breiter und tief liegender Kofferraumboden darstellbar.
Weiterhin ist der in Vertikalrichtung oberhalb des Mittelpunktes des angetriebenen Rades am Radträger angelenkte Querlenker in Fahrtrichtung betrachtet hinter Radmitte mit dem Radträger verbunden und es ist der in Fahrtrichtung betrachtet vor Radmitte am Radträger angelenkte Querlenker in Vertikalrichtung unterhalb Radmitte mit dem Radträger verbunden. Mit diesen Anlenkpunkten ist eine günstig verlaufende Lenkachse für das Rad beschrieben, so dass schließlich der in Fahrtrichtung betrachtet am weitesten hinten angeordnete Querlenker mit seinem dem Radträger abgewandten Ende mit einem Lenkaktuator für das Rad verbunden ist und damit als Spurlenker fungiert.

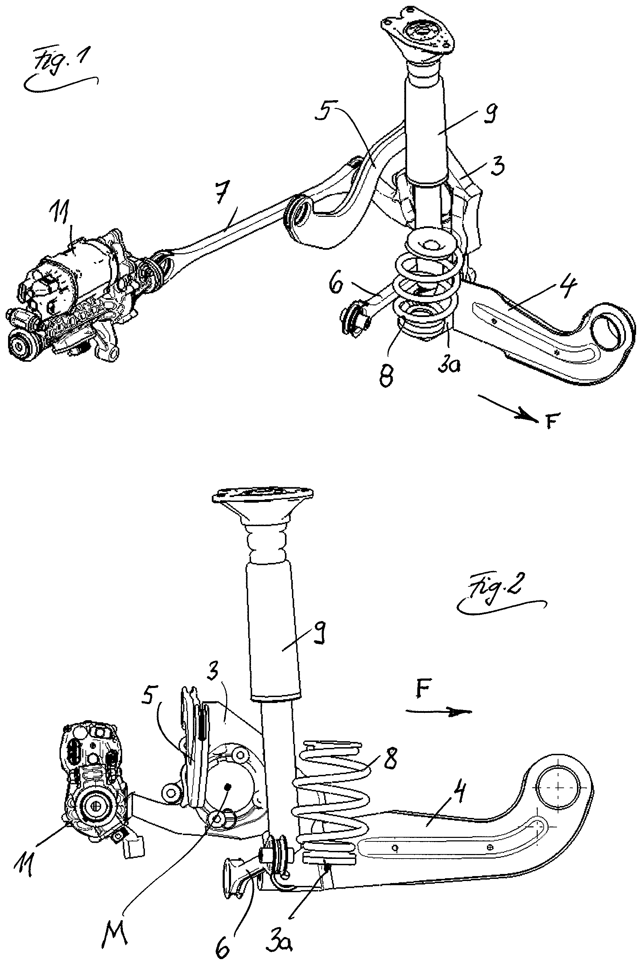

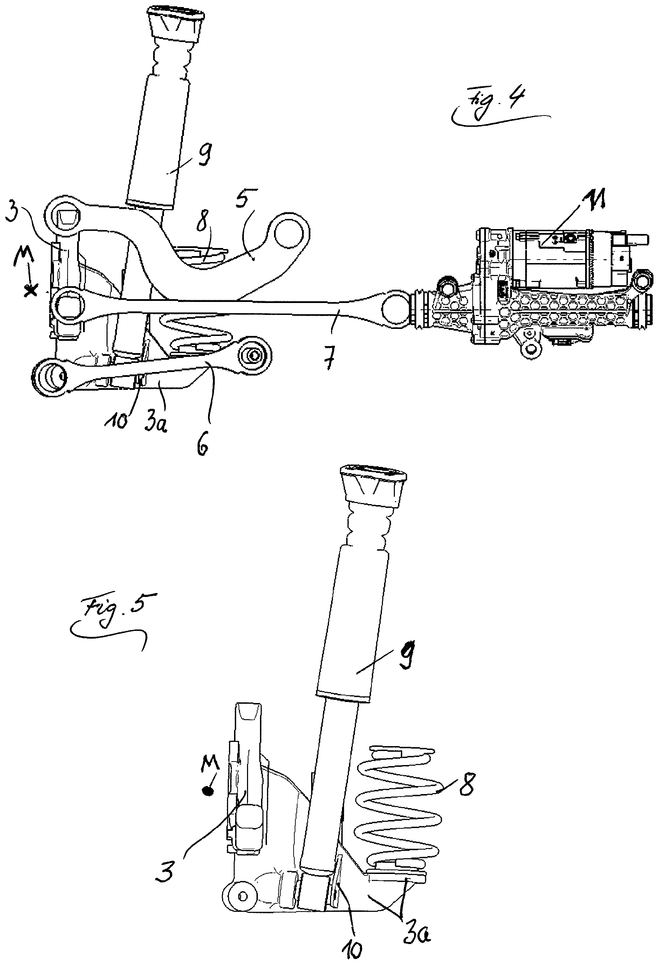

Weiterhin ist auch der Schwingungsdämpfer weiter außen als die Tragfeder auf dem besagten Ausleger abgestützt und der Längslenker am besagten Ausleger befestigt. Damit ist nicht nur ein steifer Verbund, sondern auch eine günstige Einleitung der Zusatzfeder-Kraft aus dem Dämpfer darstellbar, wobei eine innere Aufnahme-Lasche für das untere Dämpfer-Lager quasi als direkte den Ausleger durchquerende Verlängerung des Längslenkers vorgesehen ist und somit eine zusätzliche Versteifung dieses Verbundes von Längslenker und Ausleger bzw. Radträger bietet.
Die beigefügten Figuren zeigen ein Ausführungsbeispiel der vorliegenden Erfindung, und zwar zeigt **Fig.1** eine räumliche Darstellung der Aufhängung des angetriebenen und geringfügig lenkbaren linken Hinterrads eines Personenkraftwagens, **Fig.2** eine Seitenansicht von innen, **Fig.3** eine Ansicht in Vertikalrichtung betrachtet von oben, **Fig.4** die Ansicht von hinten in Fahrtrichtung betrachtet sowie **Fig. 5** in der gleichen Ansicht nur die Anlenkung des Dämpfers am Radträger bzw. an dessen Ausleger.
Das nicht gezeigte linke Hinter-Rad mit dem Mittelpunkt M (vgl. **Fig.2****,** **4**) ist mittels einer in den Figuren nicht gezeigten und wie üblich im wesentlichen in Fzg.-Querrichtung horizontal liegenden Antriebswelle antreibbar und wird über seinen Radträger 3 durch insgesamt vier Lenker 4, 5, 6, 7 geführt, die mit ihrem dem Radträger 3 abgewandten Ende entweder direkt oder unter Zwischenschaltung eines nicht dargestellten Hinterachsträgers indirekt mit dem (ebenfalls nicht gezeigten) Fahrzeug-Aufbau verbunden sind. Über eine Tragfeder 8, der wirkungsmäßig ein Schwingungs-Dämpfer 9 parallel geschaltet ist, ist der Fahrzeug-Aufbau anteilig auf dem Radträger 3 (bzw. dem an diesem drehbar gelagerten Rad) abgestützt.
Wie ersichtlich ist die Tragfeder 8 praktisch direkt auf dem Radträger 3 bzw. am mit diesem starr verbundenen Längslenker 4 abgestützt, indem dieser Längslenker von einem vom selbst annähernd scheibenförmigen Radträger 3 zur Fzg.-Mitte hin abragenden Ausleger 3a abgeht, auf dessen freiem Ende die Tragfeder 8 abgestützt ist, wie im folgenden noch weiterläutert wird und am besten aus **Fig. 5** hervorgeht. Damit ist keiner der gelenkig mit dem Radträger 3 verbundenen Querlenker 5, 6, 7 durch die Kraft dieser Tragfeder 8 belastet. Vorteilhafterweise kann damit der in Fahrtrichtung F betrachtet am weitesten hinten angeordnete Querlenker 7 solchermaßen angeordnet werden, dass er sich in einer für einen die Spur und somit den Lenkwinkel des zumindest geringfügig lenkbaren Rades bestimmenden sog. Spurlenker günstigen Position befindet, nämlich mit möglichst großer Länge im wesentlichen in Höhe der Radmitte M im wesentlichen in Fzg.-Querrichtung verläuft. Damit kann ein nicht gezeigtes Achsgetriebe für die Antriebswelle günstig in einem bereits genannten Achsträger aufgehängt sein und es kann auch der den Spurlenker/Querlenker 7 betätigende Lenkaktuator 11 an diesem Achsträger angebunden werden.

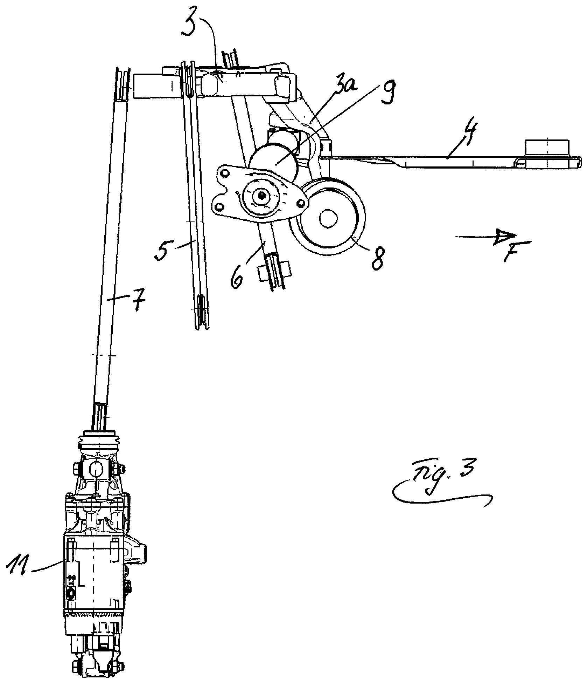

Für die Abstützung der Tragfeder 8 am Radträger 3 ist ein von dessen "Grundstruktur" als im wesentlichen scheibenförmiges Gebilde mit einer relativ geringen Höhe in Fahrzeug-Querrichtung betrachtet zur Fahrzeug-Mittenebene hin abragender steifer Ausleger 3a vorgesehen, auf dessen freien Ende die Tragfeder 8 abgestützt ist. Indem die Abstützung der Tragfeder 8 somit ausreichend weit von der Radmitten-Ebene beabstandet ist, kann aufgrund der Federübersetzung im Bereich zwischen 0,7 und 0,8 eine äußerst kompakt bauende Tragfeder 8 mit geringer Bauhöhe eingesetzt werden. Und dadurch, dass der Ausleger 3a unter Berücksichtigung der erforderlichen Bodenfreiheit des Fahrzeugs möglichst weit unterhalb der Radmitte M (ca. 150mm über der Fahrbahn) vorgesehen ist, kann die Tragfeder 8 unterhalb eines nicht gezeigten Karosserielängsträgers zum Liegen kommen. Hierdurch ergeben sich Vorteile für die Fahrzeugtopologie und das Gepäckraumvolumen des Fahrzeugs. Die Wirklinie der Tragfeder 8 ist im Wesentlichen senkrecht ausgerichtet und es ist dieser Ausleger 3a auch für die Anbindung des Längslenkers 4 und des Dämpfers 9 genutzt. Wie insbesondere aus **Fig.3** hervorgeht geht nämlich der Längslenker 4 vom Ausleger 3a des Radträgers 3 (und somit nicht direkt vom annähernd scheibenförmigen Radträger 3 selbst) ab.

Ebenso wie die Tragfeder 8 ist auch der Schwingungs-Dämpfer 9 zur Entlastung der Querlenker 5 - 7 von dessen Kräften über den genannten Ausleger 3a letztendlich auf dem Radträger 3 abgestützt. Dabei ist hier eine Anordnung mit Dämpferlage in Fahrtrichtung F betrachtet vor Radmitte M und einer Übersetzung von ca. 0,9 vorgeschlagen. Diese Anordnung bietet durch die geringere Übersetzung eine kürzere Dämpferlänge, was für diverse Karosseriekonzepte von Vorteil ist. Um dabei die durch die Kraft einer im Dämpfer 9 üblicherweise vorgesehenen Zusatzfeder entstehenden Sturzmomente bei höheren Einfederwegen gering zu halten, ist der Dämpfer 9 mit seinem oberen Ende mit leichter Neigung zur Fzg.-Mittenebene hin angeordnet (vgl. **Fig.4**) und dabei solchermaßen geneigt, dass dessen verlängerte Kraftlinie innerhalb des Radaufstandspunktes mit möglichst geringem Abstand (in der Größenordnung von 150 mm) von diesem auf der Fahrbahn auftrifft.

Am gezeigten Ausführungsbeispiel dargestellt ist eine kompakte zweischnittige Dämpferanbindung am Ausleger 3a des Radträgers, wie insbesondere aus **Fig.5** hervorgeht. Dabei ist eine innere Aufnahme-Lasche 10 für das untere Dämpfer-Lager quasi als direkte den Ausleger 3a durchquerende Verlängerung des Längslenkers 4 angeordnet und bietet somit eine zusätzliche Versteifung dieses Verbundes von Längslenker 4 und Ausleger 3a bzw. Radträger 3.

Es wurde bereits erwähnt, dass der als Spurlenker fungierende Querlenker 7 möglichst lang (vorliegend in der Größenordnung von 500 mm) gestaltet ist, damit dessen insbesondere radträgerseitiges Lager möglichst gering auf Torsion belastet wird und damit eine möglichst geringe Querbewegung der Achse beim Ein- und Ausfedern erfolgt. Die Länge der weiteren Querlenker 5, 6 hängt von der Länge des Spurlenkers 7 ab. Bei der hier dargestellten Lenkeranordung ergibt ein Verhältnis von ca. 3 zu 5 einen günstigen Verlauf der Spurkurven über dem Radhub. Daraus ergibt sich für die beiden Querlenker 5, 6 eine Länge von ca. 300 mm und es sind der obere Querlenker 5 und der untere Querlenker 6 solchermaßen angeordnet, dass deren (im wesentlichen übliche) Funktionsziele bestmöglich erfüllt werden, nämlich dass sich eine gute Kinematik (als Verlauf der Spur- und Sturzkennlinien über dem Radhub) sowie eine gute Elastokinematik (Fahrstabilität bei Längs- und Querdynamik) als auch vernünftige Lenkkräfte und Lenkwinkel für das geringfügige Lenken des Rades 1 einstellen. Dabei bildet die Verbindungslinie der beiden radträgerseitigen Gelenkpunkte der Querlenker 5, 6 die Lenkachse für die Hinterradlenkung. Der Abstand zum radträgerseitigen Spurlenker-Gelenkpunkt ergibt den Spurhebel, von dessen Länge die vom Lenkaktuator 11 zu erbringende Stellkraft und der benötigte Stellweg abhängen. Auch bewegen sich die durch die Radlasten in den Lagern aller Querlenker 5, 6, 7 hervorgerufenen Vorlasten durch die gewählte LenkerAnordnung auf ein einem relativ niedrigen Niveau.

Konkret ist die Anordnung der Querlenker 5, 6 solchermaßen getroffen, dass der radträgerseitige Anlenkpunkt des oberen (= oberhalb Radmitte M liegenden) Querlenkers 5, der um ca. 3 Grad nach vorne gepfeilt verläuft, ca. 57 mm hinter Radmitte M liegt. Der radträgerseitige Anlenkpunkt des um ca. 12 Grad nach vorne gepfeilt verlaufenden unteren ((= unterhalb radmitte M liegenden) Querlenkers 6 liegt ca. 12mm vor Radmitte M. Die Höhenlage der Querlenker 5, 6 hängt insbesondere von den Bauraumverhältnissen in der Felgenschüssel des Rades ab. Für das hier gezeigte Ausführungsbeispiel ergibt sich für das radträgerseitige Gelenk des oberen Querlenkers 5 ein Abstand zur Radmitte M von ca. 118 mm und für dasjenige des unteren Querlenkers ein Radmittenabstand von ca. 135 mm, wobei der obere Querlenker um ca. 3 Grad nach unten gepfeilt verläuft und der untere Querlenker 6 um ca. 8 Grad nach oben gepfeilt ist.

## Patentansprüche

1. Hinterachse eines zweispurigen Fahrzeugs mit drei gelenkig mit einem Radträger (3) verbundenen und sich im wesentlichen in Fahrzeug-Querrichtung erstreckenden Querlenkern (5, 6, 7) sowie einem starr mit dem Radträger (3) verbundenen Längslenker (4), welcher durch seine Struktur oder seine fahrzeugaufbauseitige Lagerung eine ausreichende Flexibilität in Fahrzeug-Querrichtung besitzt,
wobei eine den Fahrzeug-Aufbau gegenüber einem am Radträger (3) drehbar gelagerten Rad anteilig abstützende Tragfeder (8) und ein dieser in der Wirkung parallel geschalteter Schwingungsdämpfer (9) ohne Zwischenschaltung eines gelenkig mit dem Radträger (3) verbundenen Lenkers (5, 6, 7) unterhalb der Radmitte (M) auf einem vom Radträger (3) zur Fahrzeugmittenebene hin abragenden Ausleger (3a) abgestützt sind, wobei der Schwingungsdämpfer weiter außen als die Tragfeder auf dem Ausleger abgestützt ist, und der in Vertikalrichtung oberhalb des Mittelpunktes (M) des angetriebenen Rades am Radträger (3) angelenkte Querlenker (5) ist in Fahrtrichtung (F) betrachtet hinter Radmitte (M) mit dem Radträger (3) verbunden ist, **gekennzeichnet durch** die Kombination der folgenden Merkmale:
• die Tragfeder (8) ist in Fahrtrichtung betrachtet soweit vor Radmitte (M) auf dem Ausleger abgestützt, dass das Rad durch eine in Fahrzeug-Querrichtung horizontal liegende Antriebswelle antreibbbar ist,
• der in Fahrtrichtung (F) betrachtet vor Radmitte (M) am Radträger (3) angelenkte Querlenker (6) ist in Vertikalrichtung unterhalb Radmitte (M) mit dem Radträger (3) verbunden
• der in Fahrtrichtung (F) betrachtet am weitesten hinten angeordnete Querlenker (7) ist mit seinem dem Radträger (3) abgewandten Ende mit einem Lenkaktuator (11) für das Rad verbunden
• der Längslenker (4) ist am Ausleger befestigt,
• eine quasi als direkte den Ausleger (3a) durchquerende Verlängerung des Längslenkers (4) bildet eine innere Aufnahme-Lasche (10) für ein unteres Lager des Schwingungsdämpfers (9).

## Claims

1. A rear axle of a two-track vehicle, comprising three control arms (5, 6, 7) connected in an articulated manner to a wheel carrier (3) and extending substantially in the transverse direction of the vehicle, and also a trailing arm (4), which is rigidly connected to the wheel carrier (3) and which has adequate flexibility in the transverse direction of the vehicle due to its structure or its mounting on the vehicle body,
wherein a bearing spring (8) proportionately supporting the vehicle body with respect to a wheel mounted rotatably on the wheel carrier (3) and a vibration damper (9) connected effectively in parallel with the supporting spring are supported on a cantilever (3a), which protrudes from the wheel carrier (3) towards the centre plane of the vehicle, without the intermediate arrangement of a control arm (5, 6, 7) connected to the wheel carrier (3) in an articulated manner beneath the wheel centre (M),
wherein the vibration damper is supported further outwardly than the supporting spring on the cantilever,
and the control arm (5) articulated to the wheel carrier (3) in the vertical direction above the centre point (M) of the driven wheel is connected to the wheel carrier (3) behind the wheel centre (M) as considered in the direction of travel (F), **characterised by** the combination of the following features:
• the supporting spring (8), as considered in the direction of travel, is supported on the cantilever at such a distance in front of the wheel centre (M) that the wheel can be driven by a drive shaft arranged horizontally in the transverse direction of the vehicle,
• the control arm (6) articulated to the wheel carrier (3) in front of the wheel centre (M) as considered in the direction of travel (F) is connected to the wheel carrier (3) beneath the wheel centre (M) in the vertical direction
• the control arm (7) arranged furthest to the rear as considered in the direction of travel (F) is connected via its end remote from the wheel carrier (3) to a control arm actuator (11) for the wheel,
• the trailing arm (4) is fastened to the cantilever,
• an extension of the trailing arm (4) passing directly as it were through the cantilever (3a) forms an inner mounting tab (10) for a lower bearing of the vibration damper (9).

## Revendications

1. Essieu arrière d'un véhicule à deux lignes de roues comportant trois bras oscillants transversaux (5, 6, 7) articulés sur un support de roue (3) et s'étendant essentiellement dans la direction transversale du véhicule, ainsi qu'un bras oscillant longitudinal (4) relié solidairement au support de roue (3), qui présente du fait de sa structure ou de son montage sur la carrosserie du véhicule une flexibilité suffisante dans la direction transversale de ce véhicule,
dans lequel :
un ressort de suspension (8) supportant une partie la carrosserie du véhicule vis-à-vis d'une roue montée mobile en rotation sur le support de roue (3), et un amortisseur d'oscillations (9) monté fonctionnellement parallèlement à celui-ci s'appuient, sans interposition d'un bras oscillant (5, 6, 7) articulé sur le support de roue (3), au dessous du centre (M) de la roue sur une flèche (3a) dépassant du support de roue (3) par rapport au plan médian du véhicule,
l'amortisseur d'oscillations s'appuie sur la flèche plus à l'extérieur que le ressort de suspension, et
le bras oscillant transversal (5) articulé sur le support de roue (3) au dessus du centre (M) de la roue entraînée en direction verticale est en considérant le sens de déplacement (F) relié au support de roue (3) à l'arrière du centre de la roue (M),
**caractérisé par** la combinaison des caractéristiques suivantes :
• le ressort de suspension (8) s'appuie sur la flèche, en considérant le sens de déplacement suffisamment à l'avant du centre (M) de la roue pour que la roue puisse être entraînée par un arbre d'entraînement situé horizontalement dans la direction transversale du véhicule,
• le bras oscillant transversal (6) articulé sur le support de roue (3) à l'avant du centre (M) de la roue en considérant la direction de déplacement (F) est relié au support de roue (3) au dessous du centre (M) de la roue en direction verticale,
• le bras oscillant transversal (7) situé le plus à l'arrière en considérant la direction de déplacement (F) est relié par son extrémité située à l'opposé du support de roue (3) à un actionneur de direction (11) de la roue,
• le bras oscillant longitudinal (4) est fixé sur la flèche,
• un prolongement du bras oscillant longitudinal (4) traversant quasiment directement la flèche (3a) forme un collier de réception interne (10) du palier inférieur de l'amortisseur d'oscillations (9).
